# EUROPEAN PATENT SPECIFICATION

(11) **EP 3 467 647 B1**
(45) Date of publication and mention of the grant of the patent: **03.06.2020**
(21) Application number: 18198140.8
(22) Date of filing: 02.10.2018
(51) Int. Cl.: G06F 8/65, G06F 21/57, H04L 9/30, H04L 9/32, H04L 29/06, H04W 12/06, H04W 4/70

(54) **GENERATING CHECKSUMS ON TRUSTED STORAGE DEVICES FOR ACCELERATED AUTHENTICATION**
GENERIEREN VON ÜBERPRÜFUNGEN AUF VERTRAUENSWÜRDIGEN SPEICHERGERÄTEN ZUR BESCHLEUNIGTEN AUTHENTIFIZIERUNG
PRODUCTION DE CONTROLES SUR DES DISPOSITIFS DE STOCKAGE DE CONFIANCE POUR UNE AUTHENTIFICATION ACCELEREE

(30) Priority: 05.10.2017 US 201715725878
(43) Date of publication of application: 10.04.2019
(73) Proprietor: Harman International Industries, Incorporated, Stamford, CT 06901 (US)
(72) Inventor: HAASE, Robert, Brighton, MI, 48114 (US)
(74) Representative: Bertsch, Florian Oliver

(56) References cited:
- US-A1- 2013 185 548
- US-A1- 2015 261 521

## Description

### TECHNICAL FIELD

The inventive subject matter is directed to a system and method for firmware updates in embedded devices of a computing system.

### BACKGROUND

Embedded devices in computing systems have extensive applications in consumer, automotive, health care and industrial markets. An embedded device is typically contained within a special-purpose computing system. Many embedded devices rely on firmware for controlling the system. Oftentimes, the functionality of a firmware-controlled device requires updates to the firmware. For example, to maintain compatibility with operating systems, to add new functionality, to correct defects, or for security reasons. The firmware update is typically stored on a mass storage device and is transferred to the embedded device upon pre-requisite conditions being met between the embedded device and the mass storage device. Currently, when performing firmware updates for embedded devices from a mass storage device, about half of the update time consists of an initial reading of information in order to verify the authenticity and consistency of the update by checking a hash and signature. Upon a match, the update is approved to proceed. Otherwise, the update will be rejected.

There is a need for a system and method that accelerates the speed at which a firmware update to an embedded device from a mass storage device takes place. US 2015/261521 and US 2013/185548 are considered prior art.

### SUMMARY

The invention is defined by the appended claims. A system and method for updating firmware for an embedded device having a public key stored thereon. The method initiates a connection between the embedded device and a storage device. The storage device has a controller, a memory and a private key associated with a manufacturer of the embedded device. At the embedded device, a firmware update on the storage device is detected. The stored public key is received from the embedded device at the controller of the storage device. The stored public key is verified using the controller and the private key associated with the manufacturer of the embedded device on the storage device. The firmware update is read from a memory of a storage device using the controller on the storage device. And upon verification of the stored public key, the firmware is updated on the embedded device.

The private key on the storage device, the private key being etched onto the storage device. The storage device may be an external mass storage device or the storage device may be an embedded multimedia controller memory controller.

### DESCRIPTION OF DRAWINGS

FIG. 1 is a block diagram of an update scenario involving a computing system, shown as an infotainment unit on a vehicle, and a USB port for receiving a mass storage device;
FIG. 2 is a block diagram of the computing system having at least one embedded device in communication with the mass storage device; and
FIG. 3 is flow chart of a method for updating firmware using a mass storage device.

Elements and steps in the figures are illustrated for simplicity and clarity and have not necessarily been rendered according to any particular sequence. For example, steps that may be performed concurrently or in different order are illustrated in the figures to help to improve understanding of embodiments of the inventive subject matter.

### DETAILED DESCRIPTION

While various aspects of the inventive subject matter are described with reference to a particular illustrative embodiment, the inventive subject matter is not limited to such embodiments, and additional modifications, applications, and embodiments may be implemented without departing from the inventive subject matter. In the figures, like reference numbers will be used to illustrate the same components. Those skilled in the art will recognize that the various components set forth herein may be altered without varying from the scope of the inventive subject matter.

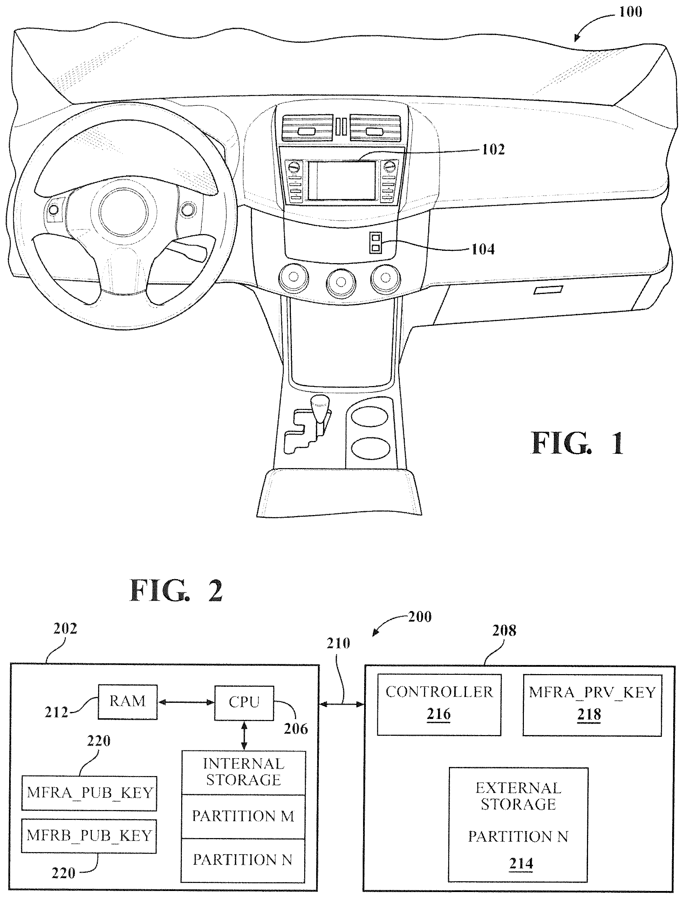

FIG. 1 is a block diagram of an update scenario 100 involving a computing system 102, such as a navigation device, a multi-media device, an infotainment unit, a personal computer, a tablet, a smartphone, or other computing system used in consumer electronic devices. The computing system 102 shown in FIG. 1 is a vehicle infotainment unit, and is shown for example purposes only. A means to connect 104 a mass storage device (not shown in FIG. 1) to the computing system 102, such as a USB port 104, to the computing system 102 is also shown in FIG. 1. Again, while a USB port is shown, this is for example purposes only. Other examples providing a bus to connect the computing device and the mass storage device also include, but are not limited to, SATA, Wi-Fi, lightning, Ethernet, UFS, 5G, etc.. The computing system 102 has one or more embedded devices (not shown) that may operate using a dedicated operating system, multiple software programs and/or platforms for interfaces such as graphics, audio, wireless networking, enabling applications, integrating hardware of vehicle components, systems, and external devices such as smart phones, tablets, and navigation systems to name just a few. Updates to firmware in embedded devices are almost always necessary to ensure optimum performance.

Referring now to FIG. 2, a block diagram 200 of an embedded device 202, of the computing system shown in FIG. 1, and a storage device 208 is shown. The storage device 208 may be received by a USB port for connecting to the computing system 102 by way of a communication bus 210. In the example shown in FIG. 2, the storage device is an external mass storage device, such as a USB drive. However, it is possible that the storage device may be a storage device that is internal to the host, for example, an embedded multi-media card (eMMC) or other solid-state storage device such as an SSD card.

Any one or more of the embedded devices 202 includes a processing unit 206 such as a computing device that includes computer executable instructions that may be compiled or interpreted from computer programs created using a variety of programming languages and/or technologies. In general, the processor (such as a microprocessor) receives instructions, for example from a memory 212, a computer-readable medium, or the like, and executes the instructions. The processing unit 206 includes a non-transitory computer-readable storage medium capable of executing instructions of a software program. The computer readable storage medium may be, but is not limited to, an electronic storage device, a magnetic storage device, an optical storage device, an electromagnetic storage device, a semi-conductor storage device, or any suitable combination thereof. The computing system and any one or more of its embedded systems rely on firmware, which may require updates from time to time to ensure compatibility with operating systems, improvements and additional functionality, security updates or the like. The embedded device 202 holds one or more public keys 220 for verification purposes.

The storage device 208 stores a firmware update and is accessed when the firmware update is to be communicated to the computing system 102 and/or the embedded device 202. The storage device 208 includes a memory chip 214 and a controller 216. The storage device controller 216 has a processor that includes computer executable instructions that may be compiled or interpreted from computer programs created using a variety of programming languages and/or technologies. In general, the processor (such as a microprocessor) receives instructions, for example from a memory, a computer-readable medium or the like and executes the instructions. The processor includes a non-transitory computer-readable storage medium capable of executing instructions of a software program including ROM and RAM. The storage device 208 includes a connector, for example a USB connector, to facilitate connection to the embedded system for transmitting updates to firmware on the embedded system.

The storage device 208 holds a manufacturer private key 218. The private key 218 is physically embedded, etched or burned, into the silicon of the storage device 208. For example, using a one-time programmable (OTP) area inside of an integrated circuit or SoC where the private key is burned/programmed during assembly and can never be modified. Alternatively, a separate hardware security module (HSM) containing the manufacturer private key on the storage device and read bytes may be passed from memory on the storage device to the HSM on the storage device for generating a signature. The manufacturer private key 218 may only be accessed at the storage device 208. The manufacturer private key 218 cannot be read out or sent, such as to a host or at the request of the host. The private key 218 is only accessed by the storage device controller 216 to generate a signed checksum that is verified by the embedded device with the file or memory area checksum and the public key/certificate.

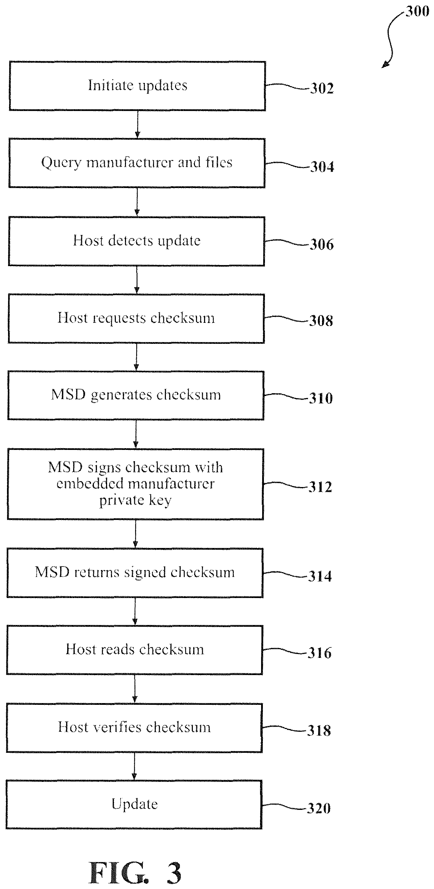

FIG. 3 is a flow chart of a method 300 for a user initiated update to firmware on an embedded device using a storage device. The storage device contains an update to firmware on the embedded device. The embedded device is referred to as the "host" with reference to FIG. 3. The update is initiated 302 by a user. For example, the user may initiate the update by connecting a storage device to the embedded device through an externally available bus, such as a USB port. The process of detecting, identifying and loading drivers for the USB device occurs, also called device enumeration, between the storage device and the host. The host performs a query 304 to detect 306 an available update on the storage device. The host requests 308 a trusted checksum from the storage device.

The next several steps are carried out on the storage device. Typically when performing firmware updates for embedded devices from a storage device, up to 50% of the update time is spent verifying the authenticity and consistency of the update by checking the hash and signature. All of this reading produces a bottleneck for the update due to the limited effective transfer speed of the storage device. The transfer speed of a storage device is typically 30 MB/sec. However, an eMMC chip on the storage device includes chips that are capable of much faster transfer speeds, such as 270 MB/sec. Therefore, by performing reading, hashing and checksum signing on the storage device controller, a much faster update may be realized. The result is that a large percentage of the update time, on the order of 40%, may be eliminated. The storage device generates 310 a checksum of the partition and signs 312 the checksum with the embedded manufacturer private key. Because the embedded device has a trusted public key from the manufacturer on the embedded device (refer to FIG. 2, 202) and the storage device has the private key associated with the manufacturer of the embedded device, verification that the hash generated by the storage device is from an authentic, or known, source, is automatic and the source, (i.e., the mass storage device), can be trusted.

The storage device returns 314 the signed checksum to the host. The host reads 316 the checksum and verifies 318 the signed checksum against the manufacturer public key already stored in the host. Upon successful verification, the firmware update is then copied 320 onto the host.

The inventive subject matter allows acceleration and authentication check by performing the checks on the storage device controller (see 216 of FIG. 2). Because the private key is etched onto the storage device, signing the hash occurs on the storage device and only the result is transferred over to the host, or embedded device. Also, by performing the reading on the storage device, the check is much faster than copying the data onto the embedded device through a slower external interface.

While the description herein is directed to a storage device, the hashing and signing may also be applied to an internal embedded multimedia card (eMMC). The eMMC is typically on the host, but a private key would be accessed at the eMMC and the private key cannot be read out or sent as well. Hashing would be accelerated as well as provide additional security for secure boot. Also, processing and hash calculation may be offloaded from the host. Further, the inventive subject matter may be used to check the consistency of files on an internal storage as well as downloaded firmware updates. For example firmware over the air (FOTA) updates or apps from sources such as Google Play or Apple Applestore may be verified to be sure they are consistent and authentic before installation to the eMMC. For Internet of Things (IoT) devices, such as home appliances or any embedded system, the internal eMMC memory controller may be leveraged. Internal hashing speeds will be faster and more secure.

In the foregoing specification, the inventive subject matter has been described with reference to specific exemplary embodiments. Various modifications and changes may be made, however, without departing from the scope of the inventive subject matter as set forth in the claims. The specification and figures are illustrative, rather than restrictive, and modifications are intended to be included within the scope of the inventive subject matter. Accordingly, the scope of the inventive subject matter should be determined by the claims and their legal equivalents rather than by merely the examples described.

For example, the steps recited in any method or process claims may be executed in any order and are not limited to the specific order presented in the claims. Additionally, the components and/or elements recited in any apparatus claims may be assembled or otherwise operationally configured in a variety of permutations and are accordingly not limited to the specific configuration recited in the claims.

Benefits, other advantages and solutions to problems have been described above with regard to particular embodiments; however, any benefit, advantage, solution to problem or any element that may cause any particular benefit, advantage or solution to occur or to become more pronounced are not to be construed as critical, required or essential features or components of any or all the claims.

The terms "comprise", "comprises", "comprising", "having", "including", "includes" or any variation thereof, are intended to reference a non-exclusive inclusion, such that a process, method, article, composition or apparatus that comprises a list of elements does not include only those elements recited, but may also include other elements not expressly listed or inherent to such process, method, article, composition or apparatus. Other combinations and/or modifications of the above-described structures, arrangements, applications, proportions, elements, materials or components used in the practice of the inventive subject matter, in addition to those not specifically recited, may be varied or otherwise particularly adapted to specific environments, manufacturing specifications, design parameters or other operating requirements without departing from the general principles of the same.

## Claims

1. A method for updating firmware for an embedded device having a public key stored thereon, the method comprising:
initiating a connection between the embedded device and a storage device, the storage device having a controller, a memory and a non-modifiable private key that cannot be read out or sent, the non-modifiable private key is accessed only at the storage device
detecting, at the embedded device, a firmware update for the embedded device on the storage device;
the embedded device requesting a trusted checksum from the storage device controller;
generating, at the storage device controller, a signed checksum using the non-modifiable private key;
returning the signed checksum to the embedded device;
verifying the signed checksum returned from the storage device controller against the public key stored on the embedded device
reading the firmware update from the storage device memory using the storage device controller; and
upon successful verification copying the firmware update from the storage device memory to the embedded device.

2. The method as claimed in claim 1 wherein the storage device is an external mass storage device.

3. The method as claimed in claim 2 wherein the non-modifiable private key is etched onto the external mass storage device.

4. The method as claimed in claim 2 wherein the non-modifiable private key is programmed into a one-time programmable area within the external mass storage device.

5. The method as claimed in claim 1 wherein the storage device is an embedded multimedia controller memory controller.

6. The method as claimed in claim 5 wherein the non-modifiable private key is etched onto the embedded multimedia controller memory controller.

7. The method as claimed in claim 5 wherein the non-modifiable private key is programmed into a one-time programmable area within the embedded multimedia controller memory controller.

8. A system for updating firmware, comprising:
a computing system;
at least one embedded device on the computing system, the embedded device having firmware, a processor, a memory and a public key stored in the memory of the at least one embedded device;
a storage device having a controller, a memory and a non-modifiable private key on the storage device that cannot be read out or sent, the non-modifiable private key is accessed only at the storage device, the storage device; and
a firmware update stored in a memory of the storage device and transferred to the at least one embedded device upon detection of the firmware update by the at least one embedded device, by request from the embedded device generating a checksum at the controller of the storage device, using the non-modifiable private key on the storage device, returning the signed checksum to the embedded device, verifying the signed checksum returned from the storage device controller against the public key stored on the embedded device, and upon successful verification, copying the firmware update to the embedded device.

9. The system as claimed in claim 8 further being configured to carry out a method as mentioned in any of claims 1 to 7.

10. The system as claimed in claim 8 or 9 wherein the storage device is an external mass storage device and the external mass storage device further comprises a separate hardware security module that contains the non-modifiable private key.

11. The system as claimed in any of claims 8 to 10 wherein the storage device further comprises an embedded multimedia controller memory controller.

12. The system as claimed in claim 11 wherein the embedded multimedia controller memory controller further comprises a separate hardware security module that contains the non-modifiable private key.

13. The system as claimed in claim 11 wherein the storage device further comprises an embedded multimedia controller in an Internet of Things device.

14. A method as claimed in any of claims 1-7, the method comprising the steps of:
reading the file to be applied using an eMMC memory controller on the embedded device;
receiving a public key stored on the embedded deviceat the eMMC memory controller;
prior to applying the file, verifying the stored public key using the eMMC memory controller and a private key accessed only on the eMMC memory controller; and
upon verification of the stored public key, transferring the file from the eMMC memory controller to the embedded device.

15. The method as claimed in claim 14 wherein the private key on the eMMC memory controller is etched onto the eMMC memory controller, programmed into a one-time programmable area of the eMMC memory controller, or contained on a separate hardware security module on the eMMC memory controller.

16. The method as claimed in claim 15 wherein the embedded system is part of an Internet of Things device.

## Patentansprüche

1. Verfahren zum Aktualisieren von Firmware für ein integriertes Gerät, auf dem ein öffentlicher Schlüssel gespeichert ist, wobei das Verfahren Folgendes umfasst:
Initiieren einer Verbindung zwischen dem integrierten Gerät und einem Speichergerät, wobei das Speichergerät eine Steuerung, einen Speicher und einen nicht modifizierbaren privaten Schlüssel aufweist, der nicht ausgelesen oder gesendet werden kann, wobei auf den nicht modifizierbaren privaten Schlüssel nur von dem Speichergerät aus zugegriffen werden kann
Erkennen, auf dem integrierten Gerät, einer Firmware-Aktualisierung für das integrierte Gerät auf dem Speichergerät;
Anfragen einer vertrauenswürdigen Prüfsumme von der Speichergerätsteuerung durch das integrierte Gerät;
Generieren, auf der Speichergerätsteuerung, einer signierten Prüfsumme unter Verwendung des nicht modifizierbaren privaten Schlüssels;
Zurücksenden der signierten Prüfsumme an das integrierte Gerät;
Verifizieren der signierten Prüfsumme, die von der Speichergerätsteuerung zurückgesendet wird, mit dem öffentlichen Schlüssel, der auf dem integrierten Gerät gespeichert ist
lesen der Firmware-Aktualisierung von dem Speichergerätspeicher unter Verwendung der Speichergerätsteuerung; und
nach erfolgreicher Verifizierung, Kopieren der Firmware-Aktualisierung von dem Speichergerätspeicher auf das integrierte Gerät.

2. Verfahren nach Anspruch 1, wobei das Speichergerät ein externes Massenspeichergerät ist.

3. Verfahren nach Anspruch 2, wobei der nicht modifizierbare private Schlüssel in das externe Massenspeichergerät eingraviert ist.

4. Verfahren nach Anspruch 2, wobei der nicht modifizierbare private Schlüssel in einem einmalig programmierbaren Bereich innerhalb des externen Massenspeichergeräts einprogrammiert ist.

5. Verfahren nach Anspruch 1, wobei das Speichergerät eine integrierte Multimediasteuerungsspeichersteuerung ist.

6. Verfahren nach Anspruch 5, wobei der nicht modifizierbare private Schlüssel in die integrierte Multimediasteuerungsspeichersteuerung eingraviert ist.

7. Verfahren nach Anspruch 5, wobei der nicht modifizierbare private Schlüssel in einem einmalig programmierbaren Bereich innerhalb der integrierten Multimediasteuerungsspeichersteuerung einprogrammiert ist.

8. System zum Aktualisieren von Firmware, Folgendes umfassend:
ein Datenverarbeitungssystem;
mindestens ein integriertes Gerät in dem Datenverarbeitungssystem, wobei das integrierte Gerät eine Firmware, einen Prozessor, einen Speicher und einen öffentlichen Schlüssel aufweist, der in dem Speicher des mindestens einen integrierten Geräts gespeichert ist;
ein Speichergerät, das eine Steuerung, einen Speicher und einen nicht modifizierbaren privaten Schlüssel auf dem Speichergerät aufweist, der nicht ausgelesen oder gesendet werden kann, wobei auf den nicht modifizierbaren privaten Schlüssel nur von dem Speichergerät aus zugegriffen werden kann; und
eine Firmware-Aktualisierung, die in einem Speicher des Speichergeräts gespeichert und, nach Erkennen der Firmware-Aktualisierung durch das mindestens eine integrierte Gerät, an das mindestens eine integrierte Gerät übertragen wird, durch eine Anfrage von dem integrierten Gerät, die unter Verwendung des nicht modifizierbaren privaten Schlüssels auf dem Speichergerät eine Prüfsumme an der Steuerung des Speichergeräts generiert, die signierte Prüfsumme an das integrierte Gerät zurücksendet, die signierte Prüfsumme, die von der Speichergerätsteuerung zurückgesendet wird, mit dem öffentlichen Schlüssel, der auf dem integrierten Gerät gespeichert ist, verifiziert und, nach erfolgreicher Verifizierung, die Firmware-Aktualisierung auf das integrierte Gerät kopiert.

9. System nach Anspruch 8, ferner dazu konfiguriert, ein Verfahren nach einem der Ansprüche 1 bis 7 auszuführen.

10. System nach Anspruch 8 oder 9, wobei das Speichergerät ein externes Massenspeichergerät ist und das externe Massenspeichergerät ferner ein separates Hardware-Sicherheitsmodul umfasst, das den nicht modifizierbaren privaten Schlüssel enthält.

11. System nach einem der Ansprüche 8 bis 10, wobei das Speichergerät ferner eine integrierte Multimediasteuerungsspeichersteuerung umfasst.

12. System nach Anspruch 11, wobei die integrierte Multimediasteuerungsspeichersteuerung ferner ein separates Hardware-Sicherheitsmodul umfasst, das den nicht modifizierbaren privaten Schlüssel enthält.

13. System nach Anspruch 11, wobei das Speichergerät ferner eine integrierte Multimediasteuerung in einem Internet-der-Dinge-Gerät umfasst.

14. Verfahren nach einem der Ansprüche 1-7, wobei das Verfahren folgende Schritte umfasst:
Lesen der anzuwendenden Datei unter Verwendung einer eMMC-Speichersteuerung auf dem integrierten Gerät;
Empfangen eines öffentlichen Schlüssels, der auf dem integrierten Gerät an der eMMC-Speichersteuerung gespeichert ist;
vor dem Anwenden der Datei, Verifizieren des gespeicherten öffentlichen Schlüssels unter Verwendung der eMMC-Speichersteuerung und eines privaten Schlüssels, auf den nur auf der eMMC-Speichersteuerung zugegriffen werden kann; und
nach der Verifizierung des gespeicherten öffentlichen Schlüssels, Übertragen der Datei von der eMMC-Speichersteuerung an das integrierte Gerät.

15. Verfahren nach Anspruch 14, wobei der private Schlüssel auf der eMMC-Speichersteuerung in die eMMC-Speichersteuerung eingraviert ist, in einem einmalig programmierbaren Bereich der eMMC-Speichersteuerung einprogrammiert ist oder in einem separaten Hardware-Sicherheitsmodul auf der eMMC-Speichersteuerung enthalten ist.

16. Verfahren nach Anspruch 15, wobei das integrierte System Teil eines Internet-der-Dinge-Geräts ist.

## Revendications

1. Procédé de mise à jour de micrologiciel pour un dispositif intégré sur lequel est stockée une clé publique, le procédé comprenant :
l'initiation d'une connexion entre le dispositif intégré et un dispositif de stockage, le dispositif de stockage ayant un module de commande, une mémoire et une clé privée non modifiable qui ne peut pas être lue ou envoyée, la clé privée non modifiable est accessible uniquement au niveau du dispositif de stockage
la détection, au niveau du dispositif intégré, d'une mise à jour de micrologiciel pour le dispositif intégré sur le dispositif de stockage ;
la demande par le dispositif intégré d'un contrôle de confiance auprès du module de commande de dispositif de stockage ;
la génération, au niveau du module de commande de dispositif de stockage, d'un contrôle signé à l'aide de la clé privée non modifiable ;
le renvoi du contrôle signé au dispositif intégré ;
la vérification du contrôle signé renvoyé depuis le module de commande de dispositif de stockage par rapport à la clé publique stockée sur le dispositif intégré
la lecture de la mise à jour de micrologiciel à partir de la mémoire de dispositif de stockage à l'aide du module de commande de dispositif de stockage ; et
lors d'une vérification réussie, la copie de la mise à jour de micrologiciel de la mémoire de dispositif de stockage au dispositif intégré.

2. Procédé selon la revendication 1, dans lequel le dispositif de stockage est un dispositif de stockage de masse externe.

3. Procédé selon la revendication 2, dans lequel la clé privée non modifiable est gravée sur le dispositif de stockage de masse externe.

4. Procédé selon la revendication 2, dans lequel la clé privée non modifiable est programmée dans une zone programmable une seule fois au sein du dispositif de stockage de masse externe.

5. Procédé selon la revendication 1, dans lequel le dispositif de stockage est un module de commande de mémoire de module de commande multimédia intégré.

6. Procédé selon la revendication 5, dans lequel la clé privée non modifiable est gravée sur le module de commande de mémoire de module de commande multimédia intégré.

7. Procédé selon la revendication 5, dans lequel la clé privée non modifiable est programmée dans une zone programmable une seule fois au sein du module de commande de mémoire de module de commande multimédia intégré.

8. Système de mise à jour de micrologiciel, comprenant :
un système informatique ;
au moins un dispositif intégré sur le système informatique, le dispositif intégré ayant un micrologiciel, un processeur, une mémoire et une clé publique stockée dans la mémoire de l'au moins un dispositif intégré ;
un dispositif de stockage ayant un module de commande, une mémoire et une clé privée non modifiable sur le dispositif de stockage qui ne peut pas être lue ou envoyée, la clé privée non modifiable est accessible uniquement au niveau du dispositif de stockage, le dispositif de stockage ; et
une mise à jour de micrologiciel stockée dans une mémoire du dispositif de stockage et transférée à l'au moins un dispositif intégré lors de la détection de la mise à jour de micrologiciel par l'au moins un dispositif intégré, sur demande du dispositif intégré qui génère un contrôle au niveau du module de commande du dispositif de stockage, utilise la clé privée non modifiable sur le dispositif de stockage, renvoie le contrôle signé au dispositif intégré, vérifie le contrôle signé renvoyé depuis le module de commande de dispositif de stockage par rapport à la clé publique stockée sur le dispositif intégré, et lors d'une vérification réussie, copie la mise à jour de micrologiciel sur le dispositif intégré.

9. Système selon la revendication 8, qui est en outre conçu pour réaliser un procédé tel que mentionné dans l'une quelconque des revendications 1 à 7.

10. Système selon la revendication 8 ou 9, dans lequel le dispositif de stockage est un dispositif de stockage de masse externe et le dispositif de stockage de masse externe comprend en outre un module de sécurité matériel distinct qui contient la clé privée non modifiable.

11. Système selon l'une quelconque des revendications 8 à 10, dans lequel le dispositif de stockage comprend en outre un module de commande de mémoire de module de commande multimédia intégré.

12. Système selon la revendication 11, dans lequel le module de commande de mémoire de module de commande multimédia intégré comprend en outre un module de sécurité matériel distinct qui contient la clé privée non modifiable.

13. Système selon la revendication 11, dans lequel le dispositif de stockage comprend en outre un module de commande multimédia intégré dans un dispositif de l'Internet des objets.

14. Procédé selon l'une quelconque des revendications 1 à 7, le procédé comprenant les étapes consistant à :
lire le fichier à appliquer à l'aide d'un module de commande de mémoire eMMC sur le dispositif intégré ;
recevoir une clé publique stockée sur le dispositif intégré au niveau du module de commande de mémoire eMMC ;
avant d'appliquer le fichier, vérifier la clé publique stockée à l'aide du module de commande de mémoire eMMC et d'une clé privée accessible uniquement sur le module de commande de mémoire eMMC ; et
lors de la vérification de la clé publique stockée, transférer le fichier du module de commande de mémoire eMMC au dispositif intégré.

15. Procédé selon la revendication 14, dans lequel la clé privée sur le module de commande de mémoire eMMC est gravée sur le module de commande de mémoire eMMC, programmée dans une zone programmable une seule fois du module de commande de mémoire eMMC, ou contenue sur un module de sécurité matériel distinct sur le module de commande de mémoire eMMC.

16. Procédé selon la revendication 15, dans lequel le système intégré fait partie d'un dispositif de l'Internet des objets.
